# EUROPEAN PATENT APPLICATION

(11) **EP 2 620 617 A2**
(43) Date of publication of application: **31.07.2013**
(21) Application number: 13152743.4
(22) Date of filing: 25.01.2013
(51) Int. Cl.: F02C 7/047, F02C 7/052, F02C 7/055, F02C 7/057

(54) **Combustion turbine inlet anti-icing resistive heating system**

(30) Priority: 26.01.2012 US 201213359106
(71) Applicant: General Electric Company, Schenectady, New York 12345 (US)
(72) Inventor: Scipio, Alston Ilford, Greenville, SC South Carolina 29615 (US); Ekanayake, Sanji, Greenville, SC South Carolina 29615 (US); Vu, Huong Van, Greenville, SC South Carolina 29615 (US); Motakef, Abbas, Greenville, SC South Carolina 29615 (US)
(74) Representative: Cleary, Fidelma

(57) **Abstract**

A resistive heating system for a combustion turbine susceptible to inlet air filter house component (42) and compressor icing includes a plurality of heating panels (bundles) (48) arranged in a substantially-planar array (46, 47), adapted to be located on or adjacent to the turbine's inlet air filter house (42). Each heating panel (48) is provided with one or more electrically-resistive heating elements (50); and a controller for selectively activating the resistive heating elements (50) on each of the plurality of heating panels (48).

## Description

### BACKGROUND

The present application relates generally to combustion turbine plants and more particularly, to an anti-icing heating system arrangement for a combustion turbine inlet filter house.

Combustion turbine engines typically include a compressor for compressing incoming air, a combustor for mixing fuel with the compressed air and igniting a fuel/air mixture to form a high temperature gas stream, and a turbine section driven by the high temperature gas stream.

Combustion turbines are utilized globally for electric power generation or as mechanical drives for operating pumps and compressors, under a variety of climatic conditions. Operation during cold ambient temperature and high humidity conditions oftentimes causes ice to build up on the turbine inlet filter house components. Frequently this ice build-up on air filtration elements (bird screens, moisture separators, coalescer filters, and filtration modules) is severe enough to restrict air flow and to increase the inlet air pressure drop across the filter house thus leading to combustion turbine performance loss or even shut down. Precipitating icing forms when water ingested as liquid or solid at temperature near or below freezing (wet snow, freezing rain, etc.) adheres to most exposed surfaces, causing ice buildup. Also, ice formation occurs when saturated cooled air comes in contact with colder filter house surfaces. The common approach to manage inlet ice build-up is to remove the moisture separators and coalescer filters installed in weather hood and heat the ambient air upstream of the air filter modules using hot air or, heating coils supplied either with steam or hot water/glycol mixture.

Some available methods use the existing turbine Inlet Bleed Heat (IBH) system to provide heat for anti-icing. Based on environmental conditions and filter house design parameters, this is often insufficient. In such cases, an independent anti-icing system is sometimes retrofitted into the filter house. With coil-based systems, heating coils are designed and placed ahead of the inlet filters to provide heating during ambient conditions that promote formation of ice on the air filters, interior filter house walls, as well as on downstream gas turbine components such as inlet guide vanes and compressor first stage blades. For coil-based systems, heating is supplied to the coils in the form of hot water water/glycol mixture or low pressure (LP) steam.

These commonly-utilized solutions are capital-cost-intensive and negatively impact production efficiency through the operating year due to the addition air flow restriction (pressure drop) imposed by, for example, the heating coils.

Accordingly, there remains a need for a relatively simple but effective, low-cost system for preventing ice build-up on bird screen and/or moisture separators and air filters in the filter house of combustion turbine plants, particularly when operating in cold, humid environments.

### BRIEF SUMMARY OF THE INVENTION

In one aspect, the invention provides a turbine inlet filter house incorporating an anti-icing system comprising an inlet filter house having an inlet and the outlet and supporting at least one filter at or near the inlet; an elongated electrically-resistive heating element supported on a heater bundle located upstream of the inlet filter house; at least one temperature sensor supported on the heater bundle; and a control system for activating the electrically- resistive heating element as a function of surface temperature of the heater bundle as determined by the at least one temperature sensor.

In another aspect, the present invention relates to a resistive heating system for a combustion turbine susceptible to inlet air filter house component and compressor icing, the system comprisinga plurality of heater bundles arranged in a substantially-planar array, adapted to be located on or adjacent the turbine inlet air filter house; each heater bundle provided with one or more electrically-resistive heating elements; and a controller for selectively activating the resistive heating elements on each of the plurality of heater bundles.

In yet another aspect, the invention resides in a turbine inlet filter house incorporating an anti-icing heating system comprising an inlet filter house having an air inlet and an air outlet, a bird screen and/or moisture separator and an air filter downstream of the bird screen and/or moisture separator; one of the bird screen and/or moisture separator and the air filter provided on a surface thereof with at least one electrically-resistive heating element shaped and arranged to raise a surface temperature of the bird screen and/or moisture separator and the air filter.

### BRIEF DESCRIPTION OF THE DRAWINGS

Embodiments of the present invention will now be described, by way of example only, with reference to the accompanying drawings in which:
Figure 1 is a partial schematic of a combustion turbine inlet filter house;
Figure 2 is a schematic diagram of an exemplary but nonlimiting anti-icing-resistive heating system applied to an inlet filter or bird screen and/or moisture separator in accordance with the invention;
Figure 3 is a partial schematic of a combustion turbine inlet filter house incorporating an anti-icing-resistive heating system in accordance with a second exemplary but nonlimiting embodiment; and
Figure 4 is a simplified schematic view illustrating a resistive heating system in accordance with an exemplary but nonlimiting embodiment, combined with a conventional Inlet Bleed Heat (IBH) system.

### DETAILED DESCRIPTION OF THE INVENTION

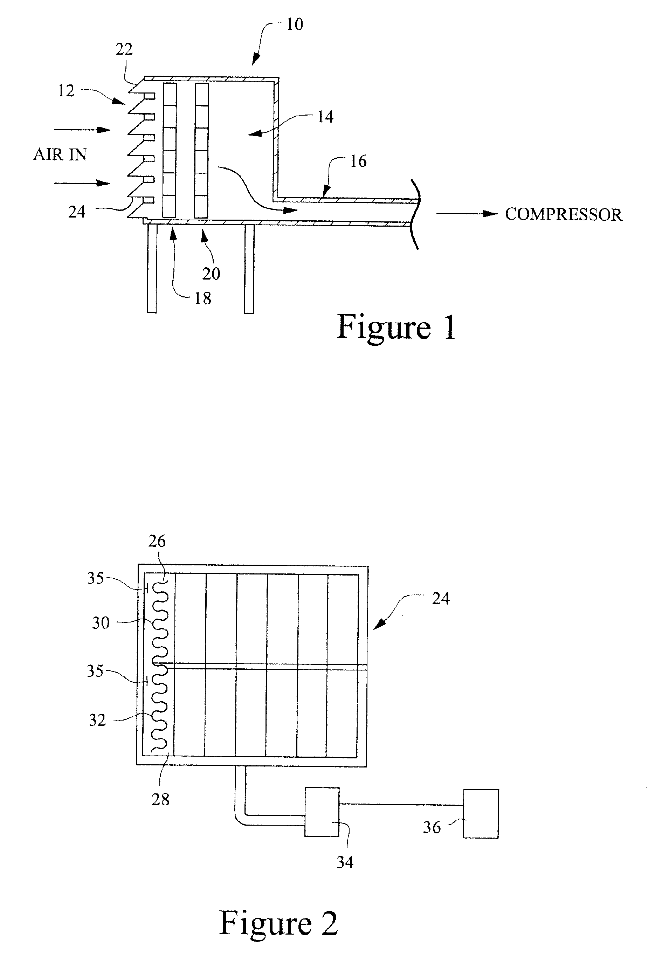

Figure 1 illustrates in simplified schematic form a typical elevated combustion turbine filter house 10 including an air inlet 12, a filter section 14 and outlet duct section 16 leading to the compressor (not shown). The filter section may include one or more arrays (modules) 18, 20 of stacked, vertically-oriented air filters described further below. The inlet section 12 may include a vertically-arranged weather hood 22, each fitted with a plurality of horizontally-oriented bird screen and/or moisture separators 24 (sometimes referred to herein simply as a "screen"), also described further below. The bird screen and/or moisture separators 24 and air filters 18, 20 ensure that only filtered air reaches the internal components of the turbine. The bird screen and/or moisture separators 24 are exposed to atmosphere and are particularly vulnerable to ice-build-up when the turbine is operating in cold and humid ambient, conditions.

Figure 2 illustrates one exemplary but nonlimiting embodiment of a resistive heating system for use with the filter house shown in Figure 1. More specifically, and with reference to a single, otherwise conventional bird screen and/or moisture separator 24, the resistive heating system is arranged to include plural, independent heating subsections or zones, exemplified by subsections or zones 26, 28, recognizing that there may be, for example, two vertically aligned rows of seven or more subsections or heating zones for each bird screen and/or moisture separator or air filter. Other configurations are within the scope of the invention, it being understood that different inlet house configurations, dimensions, etc. will require variations in screen and/or filter layouts. Each subsection or zone may include one or more electrical resistance elements, such heat-tracing cables 30, 32, respectively, laid out in predetermined patterns on the screen 24 to ensure sufficient heating of the respective zones to substantially eliminate or prevent the build-up of ice on the screen. It will be appreciated that similar resistive heating elements may be provided in designated heating zones on each of the bird screen and/or moisture separators 24 at the inlet to the filter house. It will also be understood that the cables are applied directly to the screen filtering media, e.g., wires rods or wire mesh, etc.).

The resistive heat-tracing cables 30, 32 (or other suitable resistive heating elements) within each heating zone may be powered by a redundant electrical power source 34 and be automatically controlled by a surface temperature thermostatic system. In the exemplary but nonlimiting example, thermocouples 35 may be used to monitor surface temperature sensors (or other Thermally Resistive Devices (RTDs)) within the designated screen sections or zones 26, 28. A thermostatic control system 36 will continuously monitor the inlet air screen surface temperatures at multiple locations (i.e., within the various heating zones 26, 28 etc.) and will energize the resistive heat-tracing cables 30, 32 in the assigned zones as needed. The control system 36 will interface with the power plant control system (not shown) so as to provide control capability from the plant control center. Alternatively, separately controlled heat-tracing cable arrangements may be installed within the individual zones. Thus, the resistive heating system is thermostatically controlled with the ability to automatically or manually raise or lower the surface temperature to compensate for ambient excursions in the variously designated zones or in subdivided areas of those zones.

It will be appreciated that a similar resistive heating arrangement may be employed with respect to the inlet air filters 18 and/or 20, so that for ease of understanding, the bird screen and/or moisture separator 24 in Figure 2 may also be regarded as an inlet filter 18 or 20 for purposes of understanding the invention described herein. In addition to the extent a bird screen and/or moisture separator is in fact a coarse filter, the term "filter" as used herein broadly embraces both air filters and bird screen and/or moisture separators used in turbine inlet filter houses, with resistive heating elements applied to the filter media.

In an example embodiment, the resistive heating system might increase the ambient air temperature at the inlet house from, e.g., 20-22°F to > 32°F but the threshold temperatures for activating and deactivating the resistive system may also vary.

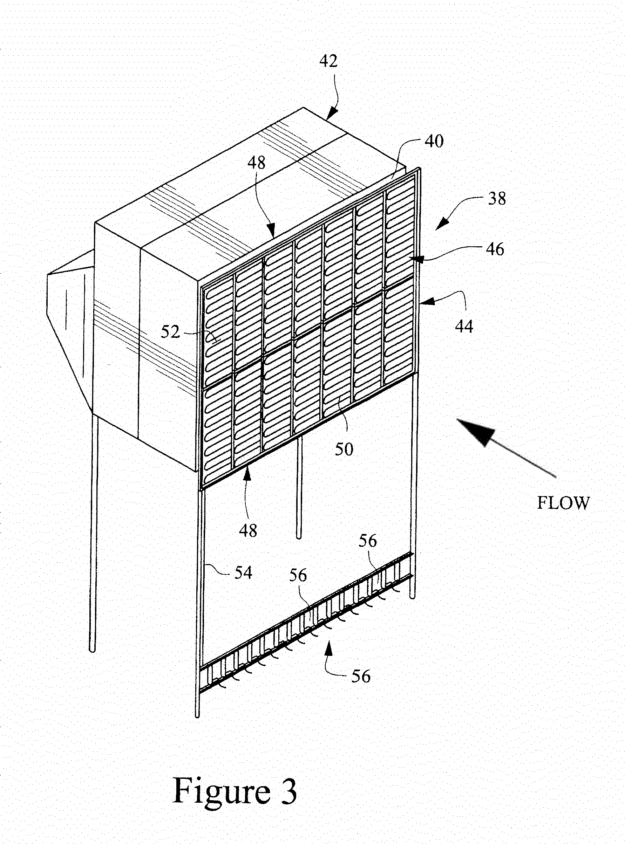

Figure 3 illustrates a second exemplary but nonlimiting embodiment. Here, a resistive heating system 38 is located in a separate steel structure in front of or upstream of the inlet 40 to the filter house 42. The structure is preferably electrically isolated from the filter house for both personnel and operational safety. In the specific embodiment shown, two horizontal rows 44, 46 of heater panels 48 are located, one above the other, with each row again comprised of seven heater bundles. It will be understood that the number of rows and the number of heater bundles in each row may vary with requirements as already noted above.

Each heater bundle 48 includes one or more electrical resistance heater element 50, again laid out in a predetermined pattern on the panel to ensure sufficient heating to substantially eliminate or prevent the build-up of ice on the bird screen and/or moisture separators and air filters behind or downstream of the heating bundles. Alternatively, each bundle 48 may include plural (for example, nine) independently controlled heater sets each comprised of (for example, three) heater elements 50. The electric power to each heater bundle is supplied from an electric panel 56. In an exemplary embodiment, each panel 56 may be 48"H x 36"W x 10"D. The panels should be UL or CE approved and "climate controlled" to ensure a range of operation and storage temperatures of -20 to 122 deg. F.

Each heater bundle incorporates an independently controlled closed loop temperature controller to maintain the air temperature gradient at the compressor bellmouth within required limits, e.g., plus or minus 5F independent of combustion turbine load and filter house physical configuration (symmetrical or non-symmetrical), and air velocity profile.

Each heater bundle is supplied with a temperature sensor (e.g., a thermocouple, one shown at 52) to measure air temperature downstream of the respective heater bundle. As shown in Figure 3, the fourteen bundles are electrically connected via conduits 54 (enclosing fourteen X nine electrical circuits) to control panels 56 located at ground level, below the elevated inlet filter house. An exemplary electrical rating requirement for each heater bundle is 275kW, 400V/3 phase. The control panels 56 include individual temperature control modules for controlling the respective heater bundles 48, and their respective plural heating elements. The exact location of the control panels may vary with specific applications. In use, a signal from the temperature sensor 52 is routed to the temperature controller mounted in the control panel 56. The controller turns the power on and off in a pre-specified sequence or regulates the voltage of electrical supply to each heater element set 50 to maintain the exit air temperature downstream of the heater bundle at the desired setpoint to insure that air humidity ratio is less than a pre-specified threshold for each temperature. A 4-20mA output signal is available from the controller that could be used to display heating rate of each heater bundle in terms of percent full capacity.

Each heating element 50 is supplied also with an over-temperature-detection-and-control to prevent overheating of heating elements in absence of air flow.

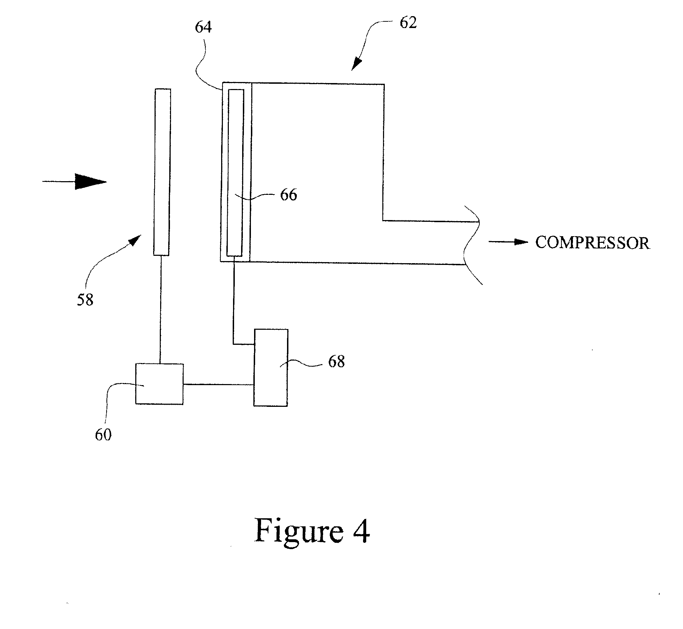

The above described features/operation applies as well to the first described embodiment shown in Figs. 1 and 2. It will also be understood that the heater bundles 48 located upstream of the bird screen and/or moisture separator could also be located within the filter house, upstream of the air filters (and downstream of the bird screen and/or moisture separators). Such a system is shown as Figure 4 where a resistive heating system 58 as described herein (either the system of Figure 2 or the system of Figure 3) is located adjacent or within the inlet portion 64 of a filter house 62. Within the filter house inlet portion, there is a conventional IBH system 66 in which a main pipe header from the turbine supplies a hot compressor air to a pipe manifold. The manifold routes the heated air to an array of pipes that are located within (or adjacent to) the inlet to thereby heat the inlet air. Here, the resistive heating system controller 60 communicates with the IBH system controller 68 so as to integrate the systems and apportion the inlet heating function as desired or needed.

Still other applications are possible. For example, the resistive heating system described herein could be employed for zonal control of a bleed-heat injection system if so equipped.

Additional commercial advantages include simplicity in that the system can be designed and operated without the need to provide additional process controller to accommodate the additional sequencing required for integration into the existing plant-control system; and lower cost, e.g., the cost to install and maintain typical inlet heating coil systems may extend into the millions of dollars, far more than required for the exemplary resistive heating system described herein. In addition, the currently-used coil system often requires filter house structural modifications such as removal of the hood and bird screen and/or moisture separators. The resistive heating system described herein will require shorter downtime for installation and operation. In addition, the presently-described invention does not include the reduced performance penalty of coils which increase pressure drop and negatively affect the turbine performance. Finally, the cycle time for installation of an inlet heating coil system typically is approximately 45 weeks whereas in the case of the resistive heating system described herein, the period from design to operation may be reduced to as few a ten weeks.

It will be further appreciated that the electrical heating system as described herein is not limited to use in cold climates. It may also be used as a de-fogger in warmer climates where fogging can lead to a caking effect on air filters.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

Various aspects and embodiments of the present invention are defined by the following numbered clauses:
1. A resistive heating system for a combustion turbine susceptible to inlet air filter house component and compressor icing, said system comprising:
   a plurality of heater bundles arranged in a substantially-planar array, adapted to be located on or adjacent said turbine inlet air filter house; each heater bundle provided with one or more electrically-resistive heating elements; and a controller for selectively activating the resistive heating elements on each of said plurality of heater bundles.
2. The resistive heating system of clause 1, wherein said electrically-resistive heating elements comprise electrical heat-tracing cables.
3. The resistive heating system of clauses 1 or 2, wherein said turbine inlet filter house components comprise a bird screen, moisture separators, coalescer filters, and air filtration modules and wherein said plurality of heater bundles are located upstream of the inlet air filter house to said turbine.
4. The resistive heating system of any of clauses 1 to 3, wherein said heater bundle is subdivided into plural sections, each section having at least one electrically-resistive heating element supported thereon, said control system configured to selectively activate any one or all of said electrically-resistive heating elements.
5. The resistive heating system of clause 4, including a temperature sensor located in each of said plural sections.
6. The resistive heating system of any of clauses 1 to 5, in combination with an IBH system located in proximity to said inlet.
7. A turbine inlet filter house incorporating an anti-icing heating system comprising:
   an inlet filter house having an air inlet and an air outlet, a bird screen and/or moisture separator and an air filter downstream of said bird screen and/or moisture separator; one of said bird screen and/or moisture separator and said air filter provided on a surface thereof with at least one electrically-resistive heating element shaped and arranged to raise a surface temperature of said one of said bird screen and/or moisture separator and said air filter.
8. The turbine inlet filter house of clause 7, wherein said at least one electrically-resistive heating element comprises an electrically-resistive heat-tracing cable.
9. The turbine inlet filter house of clauses 7 or 8, wherein said one of said bird screen and/or moisture separator and said air filter is divided into at least two zones, each provided with one or more of said electrically-resistive heating elements.
10. The turbine inlet filter house of clause 9, wherein said surface temperature of each of said at least two zones is individually controlled.
11. The turbine inlet filter house of clauses 9 or 10, and further comprising multiple temperature sensors on said one of said bird screen and/or moisture separator and said air filter for monitoring surface temperatures in said at least two zones.
12. The turbine inlet filter house of any of clauses 7 to 11, in combination with an IBH system located in proximity to said inlet.
13. The turbine inlet filter house of clauses 11 or 12, wherein said multiple temperature sensors provide temperature signals to a thermostatic control system adapted to selectively activate said electrically-resistive elements of each of said at least two zones.

## Claims

1. A turbine inlet filter house incorporating an anti-icing system comprising:
an inlet filter house (42) having an inlet (40) and an outlet and supporting at least one filter at or near said inlet (40);
an elongated electrically-resistive heating element (50) supported on a heater bundle (48) located upstream of said inlet filter house (42);
at least one temperature sensor (52) supported on said heater bundle (48); and
a control system (60) for activating said electrically- resistive heating element (50) as a function of surface temperature of said heater bundle (48) as determined by said at least one temperature sensor (52).

2. The turbine inlet filter house of claim 1, wherein said heater bundle (48) is subdivided into plural sections (26, 28), each section having at least one electrically-resistive heating element (50) supported thereon, said control system (60) configured to selectively activate any one or all of said electrically-resistive heating elements (50).

3. The turbine inlet filter house of claims 1 or 2, wherein said electrically-resistive heating elements comprise electrical heat-tracing cables.

4. The turbine inlet filter house of any of claims 1 to 3, wherein said at least one temperature sensor comprises a thermocouple or a Resistive Thermal Device (RTD).

5. The turbine inlet filter house of any of claims 1 to 4, wherein said heater bundle (48) comprises plural bundles (48) in a substantially-planar array (44, 46).

6. The turbine inlet filter house of claim 5, wherein each of said plural bundles (48) is provided with one or more resistive heating elements (50).

7. The turbine inlet filter house of claims 5 or 6, wherein said resistive heating elements on said plural bundles (48) are separately controlled.

8. The turbine inlet filter house of any of claims 1 to 7, in combination with an IBH system located in proximity to said inlet (40).

9. The turbine inlet filter house of any preceding claim, wherein said turbine inlet filter house components comprise a bird screen, moisture separators, coalescer filters, and air filtration modules.
